# EUROPEAN PATENT APPLICATION

(11) **EP 1 813 424 A1**
(43) Date of publication of application: **01.08.2007**
(21) Application number: 06101020.3
(22) Date of filing: 30.01.2006
(51) Int. Cl.: B32B 27/34, B32B 27/20, A22C 13/00, C08J 3/22

(54) **Filler composition for use in a multi-layered tubular food casing**

(71) Applicant: A. SCHULMAN PLASTICS, 2880 Bornem (BE)
(72) Inventor: Daponte, Tony, 2070, Zwijndrecht (BE)
(74) Representative: Luys, Marie-José A.H.

(57) **Abstract**

The present invention relates to a multi-layer heat shrinkable film casing for pasty food, comprising at least an outer layer which includes at least one polyamide based polymer, an inner layer which includes at least one polyamide based polymer and a core layer disposed between the inner layer and the outer layer, the at least one core layer including at least one polyolefin based polymer. The outer layer and the core layer include an amount of a filler composition comprising an amount of at least one carrier material suitable for carrying at least one pigment, the carrier including at least one polymer of an alpha unsaturated aromatic monomer or a copolymer of such a polymer. The vinyl aromatic monomer is preferably styrene. The at least one C3-C10 α-olefin is preferably butadiene. The carrier material is preferably a thermoplastic styrenebutadiene copolymer, having randomly distributed styrene and butadiene units.

## Description

The present invention relates to a multi-layer heat shrinkable film casing for pasty food, comprising at least an outer layer which includes at least one polyamide based polymer, an inner layer which includes at least one polyamide based polymer and at least one core layer disposed between the inner layer and the outer layer, the at least one core layer including at least one polyolefin based polymer, according to the preamble of the first claim. The present invention also relates to a filler composition for use in such a multi-layer film casing.

Nowadays, polyamide based casings have become a common material for packaging pasty foodstuff, in particular cheese and meat sausages. However, in order to be suitable for use as a casing for water or steam cooked sausages, these materials should meet certain requirements. In particular, they should permit cooking of the encased sausage at a temperature of at least 65-100°C, have good water and moisture barrier properties to limit water penetration in the course of cooking, as well as water loss during and after cooking. Preferred casings have a low oxygen permeability to minimize the risk to discoloration, adverse flavor changes and oxidation of the sausage upon storage. Preferred casings show good stretchability, fit tightly to the sausage, with a minimum of so called jelly pockets between the inner layer of the casing and the sausage; they should show a good abrasion resistance and a meat adhesion which is not too weak and not too strong. The material should be food safe. Besides that, it is often desirable that at least the outer layer is printable and that the casing is either mat or shows the desired gloss and haze.

The known casings are produced in a wide variety of colours, for example red, orange, white and gold. Casings with a deep, uniform and sufficiently opaque colour are usually produced from multi-layer films, wherein a filler containing at least one pigment is added to the outer layer and to at least one of the layers beneath the outer layer. Uniform colour requires the use of a pigment which is well dispersible and shows sufficient compatibility with the polymer to which it is to be added. However, the outer layer and the layer beneath it are usually made of polymer materials having a different nature: whereas the outer layer is mostly made of a polyamide based polymer, the core layer is usually made of a polyolefin based material. Fillers compatible with the outer layer, mostly show limited compatibility with the core layer and vice versa. As a consequence, different fillers have to be used in the outer layer and core layer. This is expensive and time consuming and therefore undesirable.

It is therefore the aim of the present invention to provide a filler composition which shows sufficient compatibility with at least two of the polymer materials used in the multi-layer film casing.

This problem is solved according to the present invention, with the technical features of the characterising part of the first claim.

Thereto, the core layer of the multi-layer film casing of this invention suitable for packing pasty food is characterised in that the outer layer and the core layer include an amount of a filler composition comprising an amount of at least one carrier material suitable for carrying at least one pigment, the carrier including at least one polymer of an alpha unsaturated aromatic monomer or a copolymer of such a polymer. Preferably the carrier material includes at least one polymer of a vinyl aromatic monomer or a copolymer thereof.

Preferred vinylaromatic polymers are copolymers of at least one vinylaromatic monomer with at least one α-olefin.

Amongst those, copolymers of at least one vinyl aromatic monomer with at least one C3-C10 α-olefin, in particular butadiene, are preferred.

Amongst those, copolymers comprising styrene as the vinyl aromatic monomer are particularly preferred.

Particularly preferred styrene-butadiene copolymers are those which are thermoplastic elastomers and have a random distribution of styrene and butadiene. Optimum compatibility of the filler composition with both the core layer and the outer layer is obtained with those copolymers which show high polarity and wherein the styrene concentration is at least 60 %, preferably at least 65 wt. % with respect to the total weight of the polymer. These polymers are preferred as they show sparsity of butadiene units with vinyl groups present. The inventors have surprisingly found that by using these polymers as a carrier in the filler composition, not only the resistance to UV irradiation and heat aging of the film casing could be improved, but that also a better printability of the film casing could be obtained which is important in the envisaged application field. If so desired, the compatibility with the other materials of the film may be adapted by incorporating suitable additives in the filler composition, to achieve the desired properties.

The above described styrene-butadiene copolymers have been found to be safe for use with food. Besides this, they have been found to show optimum compatibility with the polymer material of both the outer layer and the core layer, which permits achieving a homogeneous dispersion of the filler in the core layer and producing a homogenously colored polymer film. The filler composition has also been found capable of improving the adhesion between the core layer and the outer layer, which permits minimizing the amount of adhesion promoting agent that is often applied between the core layer and the outer layer. The filler composition may be incorporated into the multi-layer casing as such, but preferably the filler composition contains an amount of at least one pigment.

As a pigment in the filler composition for the polymer film casing of this invention, usually the conventional pigments used in this type of materials will be applied. Examples of suitable pigments include organic pigments such as orange PO 64 and Red PR 254, inorganic pigments such as Brown Pr 24, yellow PY 42 and Red PR 101 and fillers as matting agents such as talc and calcium carbonate. However, any other pigment considered suitable by the person skilled in the art may be used. The inventors have surprisingly observed that the above-described carrier material shows improved compatibility with the pigments that are commonly used for pigmenting multi-layer sausage film casings.

The above described filler composition is suitable for use with a wide variety of mono-layer and multi-layer film casing materials, such as for example those described below. Therefore, the present invention also relates to the use of the above described filler composition in the production of a film casing.

The filler composition of this invention may, besides the above described carrier material and pigments, comprise the usual additives and additional fillers. The filler composition may for example contain mineral materials, layered minerals such as talc to impart a pearl effect to the casing, or any other material considered suitable by the person skilled in the art.

The film used for producing the casing will usually have a total thickness between 30 and 60 µm. The thickness of the outer layer will mostly be larger than the thickness of the two other layers. The outer layer generally has a thickness between 14 and 48 µm. The film is usually made by co-extrusion of multiple polymer materials and is mono or bi-axially stretched, heat shrinkable.

In the multi-layer film casing of the present invention, the outer layer will usually function as an oxygen barrier, to minimize the risk to the occurrence of oxygen defects, for example discoloration of the contents of the sausage. The polymer for the **outer layer** is further chosen such that it has a comparably high water absorbing capacity, to guarantee sufficient smoothness and flexibility during production of the sausages and a tight fitting of the casing in the final product. Since it is advisable that the core layer is virtually impermeable to water and water vapor, the material of the outer layer is preferably chosen such that it absorbs any moisture from the packed sausage meat to the smallest possible extent only. To achieve this, the polymer of the outer layer comprises a polyamide, which is a polymer having recurring (-CONH-) linking units in the molecular chain. In the outer layer preferably use is made of an aliphatic polyamide or a blend of two or more different aliphatic polyamides, an aliphatic co-polyamide or a polymer blend of two or more thereof or a blend of two or more of the afore-mentioned compounds. If so desired, aromatic polyamides and blends of aliphatic and aromatic polyamides may be used as well, but aliphatic polyamides are preferred for their functional properties.

The aliphatic polyamide may be a polycondensate of an aliphatic primary diamine having 4 to 8 carbon atoms and an aliphatic dicarboxylic acid having 4 to 10 carbon atoms. The aliphatic polyamide may also be a homo-polymer of omega-aminocarboxylic acids having 6 to 12 carbon atoms or omega-amino carboxylic lactams having 6 to 12 carbon atoms. The aliphatic co-polyamide may a homo-polycondensate or homo-polymer, and may be a polymer based on one or more different aliphatic diamines and one or more different aliphatic dicarboxylic acids and/or one or more different omega-aminocarboxylic acids or omega-aminocarboxylic lactams. Examples of suitable dicarboxylic acids include adipic acid, azelaic acid, sebacic acid and dodecane dicarboxylic acid. Suitable diamines include tetra-, penta-, hexa-, and octamethylene diamine, with hexamethylene diamine being particularly preferred. 11-Amino-undecanoic acid is an example of an omega-aminocarboxylic acid, and epsilon-caprolactam and omega-lauric lactam are examples of lactams. Polycaprolactam (PA 6) and polyhexamethylene adipinamide (PA 66) or blends of these polyamides are particularly preferred aliphatic polyamides. The preferred aliphatic copolyamide is made from the compounds listed above and a preferred aliphatic copolyamide is made of caprolactam, hexamethylene diamine and adipic acid (PA 6/66). Polycaprolactam PA6, polyhexamethylene adipinamide (PA 66) and blends thereof are preferred as they may be present in admixture with other water-absorbing polymers, including polyesters.

If so desired, the outer polyamide layer may comprise up to 25% by weight of further polymers which are compatible with the polyamide or polyamide blend. Preferably the further polymer will be present in an amount of 3 to 10% by weight, so as not to substantially impair the water-absorbing properties and the strength of the outer layer. Suitable further polymers include polyolefins and modified polyolefins carrying functional groups. Suitable examples of polyolefins include homo- or copolymers of alpha-olefins having 2 to 8 carbon atoms, for example ethylene, propylene and butylene, preferably polyethylene, in particular LDPE and LLDPE. Suitable examples of modified polyolefins include those which function as adhesion-promoting components for the core layer, for example polyolefins with carboxyl groups, i.e., groups comprising acids, esters, anhydrides and salts of carboxylic acids.

The outer layer may further contain the usual additives, such as matting agents or any other additives providing a desirable aesthetic effect. The above described materials for the outer layer readily accept ink and can be provided with printing without problem. The inventors have now found that by incorporation of the above described filler composition or even only the above-described carrier of the filler composition, the printability of the film surface may be improved.

The material of the **inner layer** will usually be chosen such that it is food save, shows good adherence to the sausage mass and has a smaller water absorbing capacity as compared to the outer layer, to limit undesirable loss of moisture from the sausage mass. The barrier properties of the inner layer are improved by the core layer exhibiting reduced water absorbing properties.

The polymer for the inner layer may contain an aliphatic polyamide, aliphatic copolyamide, an aromatic polyamide or copolyamide or of a polymer blend incorporating two or more of these compounds. The aromatic polyamide or copolyamide is preferably only partially aromatic. Further polymers, such as polyolefins, polyesters or ionomers may be present in the inner polyamide layer in an amount of up to 15% by weight. This means that the inner layer may, similar to the outer layer, comprise a single polymer or polymer blend.

The aliphatic polyamide used in the inner layer will preferably be chosen such that it has a lower water absorbing capacity than the aliphatic polyamide employed for the outer layer. Therefore, aliphatic polyamides having relatively long methylene chains, such as PA-11 or PA-12 or copolyamides comprising these units are advantageously used for the inner layer. If a casing with a reduced oxygen permeability is envisaged, the inner layer preferably comprises a partially aromatic polyamide and/or a partially aromatic copolyamide, comprising aliphatic and aromatic units.

The adhesion between the sausage composition and the inner layer can be improved by adding for example ionomers to the aliphatic polyamide. The layer of aliphatic polyamide or co-polyamide protects the sausage meat from direct contact with the polyolefin. The oxygen barrier properties of the inner layer are, however, comparatively low.

If so desired, the filler composition may be incorporated into the inner layer as well.

The polymer for the **core layer** is preferably chosen such that it is substantially impermeable to water vapour and that it absorbs water to a minimum extent only. The thickness of the core layer is usually between 5 and 25 µm. In that way it is ensured that the casing possesses the necessary impermeability to water and water vapour required for the production of scalded and cooked sausages.

The material used for the core layer will usually comprise an amount of a polymer of an alpha unsaturated olefin or an alpha unsaturated aromatic compound, preferably an ethylene based or a vinyl based polymer, although propylene based polymers can be used as well but are less preferred. Preferred polymers for the core layer are selected from the group of polyolefins, copolymers of ethylene with at least one C3-C10 α-olefin or ethylene polymers having a functional moiety derived from a carboxylic acid, an anhydride or an ester, for example vinylacetate, VLDPE, LLDPE, LDPE, HDPE copolymers of ethylene with a vinyl ester, an acrylate or an alkyl acrylate, an acid copolymer or a partially neutralised ionomer thereof, and blends of two or more of these materials. Those materials are preferred as they provide desirable softness, shrink and stretch orientation properties to the core layer.

According to a further preferred embodiment the polymer of the core layer mainly consists of a polyethylene based polymer.

Suitable core layer copolymers of ethylene and esters include copolymers of ethylene and unsaturated esters, in particular vinyl esters. Other suitable core layer copolymers include ethylene vinylacetate, ethylene methyl methacrylate, ethylene ethyl methacrylate and ethylene alkylacrylates. Ethylenevinylacetate is a specially preferred core polymer material. Still other suitable core layer materials include blends of these copolymers. The polymer material used for the core layer may also be a polyolefin, in particular a homo-polymer of ethylene or a copolymer of linear alpha-olefins having 2 to 8 carbon atoms or a blend of several of these polymers. Suitable copolymers include C2 /C3 copolymers and C3 /C4 copolymers and also C2 /C3 /C4 ter-polymers. A mixture comprising C3 /C4 copolymer and C2 /C3 /C4 ter-polymer is an exemplary suitable blend.

In case the core layer comprises one or more polyolefinic compounds, usually an adhesion promoting agent will be included in view of improving the adhesion between the two polyamide layers and the core polyolefin layer.

To improve adhesion between the outer layer and the core layer, a layer of a first adhesive agent may be applied between the outer layer and the core layer. Similarly, a layer of a second adhesive agent may be applied between the core layer and the inner layer. The adhesive agent will usually include an mount of an ethylene based polymer, preferably a polymer material based on polyethylene, ethylene vinlyacetate, ethylene methacrylate, ethylene methyl methacrylate or an ionomer as a basic component. Suitable examples include LLDPE alone or blended with ethylene vinylalcetate, or polymers grafted with/or containing maleic acid anhydride.

The filler composition of this invention presents the advantage that it shows a sufficient affinity for the adhesive material, which is usually applied between the outer layer and the core layer. Thus the present invention also relates to multi-layer casings wherein the adhesive layer applied between the outer layer and the core layer comprises an amount of the filler composition of this invention.

If so desired, depending on the envisaged properties of the casing, further layers may be added. For example one or both of the inner and outer layer may be coated with a coating polymer.

The tubular casing will usually be produced using co-extrusion of the polymers forming the individual layers through an annular die. The casing is oriented by mono or biaxial stretching and exhibits excellent resistance to deformation and good resilience properties.

The present invention also relates to a filler composition as described above for use in the above-described film casing.

The present invention further relates to a carrier material as described above for use in the above-described filler composition and/or the above described film casing.

## Claims

1. A multi-layer heat shrinkable film casing for pasty food, comprising at least
■ an outer layer which includes at least one polyamide based polymer,
■ an inner layer which includes at least one polyamide based polymer and
■ a core layer disposed between the inner layer and the outer layer, the at least one core layer including at least one polyolefin based polymer,
**characterised in that** the outer layer and the core layer include an amount of a filler composition comprising an amount of at least one carrier material suitable for carrying at least one pigment, the carrier including at least one polymer of an alpha unsaturated aromatic monomer or a copolymer of such a polymer.

2. A multi-layer heat shrinkable film casing as claimed in claim , **characterised in that** the at least one polymer of an alpha unsaturated aromatic monomer or a copolymer thereof, is a vinyl aromatic monomer or a copolymer of such a polymer.

3. A film casing as claimed in claim 1, **characterised in that** the carrier material includes a copolymer of a vinylaromatic monomer with at least one α-olefin.

4. A film casing as claimed in any one of claims 1-3, **characterised in that** the carrier includes a copolymer of a vinyl aromatic monomer with at least one C3-C10 α-olefin.

5. A film casing as claimed in any one of claims 1-4, **characterised in that** as the vinyl aromatic monomer use is made of styrene.

6. A film casing as claimed in any one of claims 1-5, **characterised in that** as the at least one C3-C10 α-olefin use is made of butadiene.

7. A film casing as claimed in any one of claims 1-6, **characterised in that** as the carrier material use is made of a thermoplastic styrene-butadiene copolymer, having randomly distributed styrene and butadiene units and a styrene content of at least 60 wt. % with respect to the total weight of the polymer.

8. A film casing as claimed in any one of claims 1-7, **characterised in that** the filler composition includes an amount of at least one pigment composition.

9. A film casing as claimed in any one of claims 1-8, **characterised in that** the polymer of the core layer comprises an amount of a polymer selected from the group of polyamide, polyolefins, ethylene based polymers or propylene based polymers, or blends of two or more of these polymers.

10. A film casing as claimed in claim 9, **characterised in that** the polymer of the core layer comprises at least one copolymer of ethylene with at least one C3-C10 α-olefin, VLDPE, LLDPE, LDPE, HDPE, copolymers of ethylene with a vinyl ester, an acrylate, an alkyl acrylate, ethylene polymers having at least one functional moiety selected from the group of esters, anhydrides and carboxylic acids, and blends of two or more of the aforementioned polymers.

11. A film casing as claimed in any one of claims 1-10, **characterised in that** the polymer for the core layer comprises polyethylene as the main component.

12. A film casing as claimed in any one of claims 1-11, **characterised in that** the polyamide polymer of the outer layer is selected from the group of an aliphatic polyamide, an aliphatic copolyamide, a blend comprising two or more of the afore-mentioned compounds.

13. A film casing as claimed in any one of claims 1-12, **characterised in that** the polyamide polymer of the inner layer is selected from the group of an aliphatic polyamide, a partially aromatic polyamide, an aliphatic copolyamide, a partially aromatic copolyamide, a blend of two or more of the afore-mentioned compounds.

14. A film casing as claimed in any one of claims 1-13, **characterised in that** the film casing further comprises a first adhesive layer applied between the outer layer and the core layer and/or a second adhesive layer applied between the core layer and the inner layer and **in that** at least one of the first and second adhesive layer comprise an amount of the filler composition.

15. A film casing as claimed in claim 13 or 14, **characterised in that** the first and second adhesive layer are made of the same or a different material and comprise a polyolefin based polymer, preferably a polyethylene based polymer.

16. A film casing as claimed in claim 15, **characterised in that** the material of the first and second adhesive layer is selected from the group of polymers comprising at least one copolymer of ethylene and at least one alpha olefin, or blends of polymer comprising at least one alpha olefin.

17. Use of the filler composition of any one of claims 1-8 in the production of a film casing according to any one of claims 1-16.

18. Carrier material of any one of claims 1-8 for use in the production of a film casing according to any one of claims 1-17.
